Europäisches Patentamt

(19) European Patent Office

Office européen des brevets

(11) Publication number : **0 358 625 B1**

## (12) EUROPEAN PATENT SPECIFICATION

(45) Date of publication of patent specification :
**02.11.94 Bulletin 94/44**

(51) Int. Cl.[5] : **H04N 5/14**

(21) Application number : **89850277.8**

(22) Date of filing : **29.08.89**

(54) **Process for forming a field of movement vectors for transmission of information relating to moving pictures.**

(30) Priority : **09.09.88 SE 8803186**

(43) Date of publication of application :
**14.03.90 Bulletin 90/11**

(45) Publication of the grant of the patent :
**02.11.94 Bulletin 94/44**

(84) Designated Contracting States :
**BE CH DE FR GB LI**

(56) References cited :
**US-A- 4 691 230**

(56) References cited :
**PROCEEDINGS OF EUSIPCO'88, 4TH EURO-
PEAN SIGNAL PROCESSING CONFERENCE,
Grenoble, 5th - 8th September 1988, pages
1613-1616, EURASIP, Amsterdam, NL; P.-C. LU
et al.: "Efficient motion estimation for image
prediction coding"**

(73) Proprietor : **TELIA AB
Marbackagatan 11
S-123 86 Farsta (SE)**

(72) Inventor : **Brusewitz, Harald
Televerket
S-123 86 Farsta (SE)**

(74) Representative : **Karlsson, Berne
Telia Research AB,
Rudsjöterrassen 2
S-136 80 Haninge (SE)**

EP 0 358 625 B1

## Description

### Scope of the invention

The present invention relates to a process for forming a field of movement vectors to be used in transmission of information relating to moving pictures. The vector field describes the movement in the picture and is transmitted instead of transmitting image point values for the image points which constitute the picture. The invention is particularly intended for pictures with moderate movement, for example in video telephony. The invention can be used in transmission on telephone lines with a transmission rate under 64 kbit/s with good picture quality.

### State of the art

The format which is usually used for this type of picture transmission comprises a block of 288 x 360 image points for the luminance signal (the black and white picture) and two blocks of 144 x 180 image points for the chrominance signals (the color signals). Instead of transmitting information relating to the value of each such image point for each picture, it is previously known to transmit information relating to the movement of the picture. The picture is divided into smaller blocks and for each block a movement vector is transmitted which indicates the movement of the block for the current picture in relation to the previous picture. In order to meet the transmission rate requirement, it has previously been necessary to use relatively large blocks and a small number of movement vectors, which has resulted in an unsatisfactory picture quality. The movement vectors were matched by means of correlation techniques.

### Summary of the invention

The present invention relates to a new process for forming a field of movement vectors, which is specially adapted for use in transmission of information relating to moving pictures according to the patent application called: "Process for transmitting information relating to moving pictures", which is filed simultaneously with the present application and which has the same applicant.

According to the invention each respective picture is divided into macro picture elements comprising a number of image points, from the luminance block and chrominance blocks, which correspond to the same physical picture area. A number of previously formed and transmitted movement vectors are tested with regard to the current macro picture element by means of a first criterion which, if it is satisfied, indicates that the movement vector in question is suitable for the current macro picture element. If more than one of the movement vectors tested are suitable, one is selected by means of a second criterion. If none of the movement vectors tested is suitable, a new movement vector is sought.

### Brief description of the drawings

The invention is described in greater detail below with reference to the accompanying drawings, in which
Fig. 1 shows the standard format for a picture,
Fig. 2 shows a macro picture element according to the invention,
Fig. 3 shows the positioning of the current macro picture element in relation to adjoining macro picture elements, and
Fig. 4 illustrates a method of finding a new movement vector.

### Detailed description of the invention

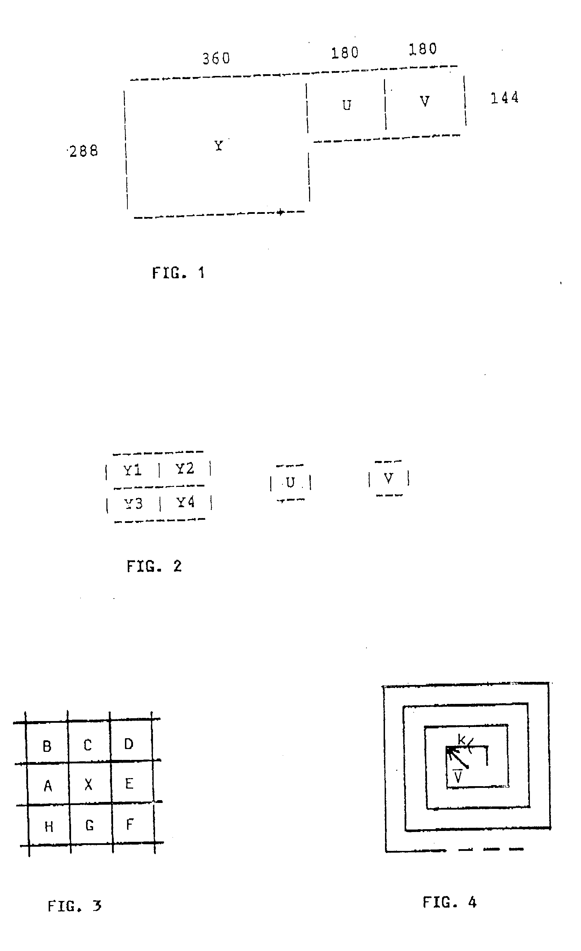

In Fig. 1 the standard format proposed by CCITT for video telephony or video conferences is shown. It comprises a luminance block Y with 288 x 360 image points and two chrominance blocks U and V comprising 144 x 180 image points each. According to prior art, the luminance block was divided into smaller blocks of 16 x 16 or 8 x 8 image points. If the block size 16 x 16 was used, it was necessary to reduce the picture to 288 x 352 image points. A movement vector was formed for every block. The movement vector was selected by means of correlation techniques so that the best matching was obtained. One criterion which was used, for example, was that the root mean square error added up over all image points in the block should be less than a certain threshold value.

It emerged that the movement vector was zero in approximately 50% of blocks. The information which was to be transmitted was then coded so that the zero vector was coded with one bit while movement vectors differing from the zero vector were coded with nine bits. With 50% moving blocks, this results in a transmission rate of approximately 2 kbit/picture, that is to say a sufficiently low bit transmission rate to be transmitted on telephone lines. However, the large blocks and the small number of movement vectors resulted in a rough quantization and sometimes unsatisfactory picture quality.

According to the invention, use is made of the knowledge that movement vectors for adjoining blocks are probably identical. By utilizing a coding in transmission which makes it possible that operations with high probability can be coded with a bit length shorter than 1, it is possible to divide the picture into smaller elements without the bit transmission rate becoming too high. According to the invention, both luminance blocks and the two chrominance blocks are used. The smallest picture element which corresponds to the same physical picture area comprises, when the above-mentioned standard format is used, four image points Y1, Y2, Y3, Y4 from the luminance block Y and one image point each from the chrominance blocks U and V. Such a picture element is here referred to as a macro picture element and is shown in Fig. 2. The transmission process is described in greater detail in the above-mentioned Swedish patent application, which is incorporated herewith by way of reference.

According to the transmission process, a movement vector is to be transmitted for each macro picture element and use is to be made of the fact that one or some of the movement vectors for adjoining macro picture elements are probably identical with the current movement vector. According to a preferred embodiment, the picture is scanned in rows from left to right and from top to bottom, which means that the movement vectors for the macro picture elements A, B, C, D according to Fig. 3, that is to say macro picture elements to the left, diagonally above and to the left, directly above, and diagonally above and to the right respectively of the current picture element X, are already known in the receiver and the transmitter. In the first instance, therefore, one of these movement vectors is to be used, in the second a new movement vector is to be sought. If no movement vector exists for the current macro picture element, the image point values for the image points which constitute the macro picture element are to be transmitted.

A common special case in transmission is that the movement vector in A is identical with the movement vector in C. If this movement vector is suitable in the macro picture element X, which is determined by means of a first criterion I, the movement vector is also selected in the macro picture element X. Examples of different criteria are described in greater detail below.

The next case is when one of the movement vectors in macro picture elements A - D is suitable in the current macro picture element X. In such a case, this movement vector is selected. If more than one different movement vectors in macro picture elements A - D are suitable in the element X, the best of them is selected by means of a second criterion II. Examples of the second criterion II are described below in greater detail.

If none of the movement vectors in macro picture elements A - D is suitable in the macro picture element X, a new movement vector is sought by means of a method which is described in greater detail below. If the method produces more than one movement vectors which are suitable, the best is selected with a criterion, preferably the criterion II.

The first criterion I is used, therefore, in order to determine whether a movement vector can be used for a given macro picture element. Accordingly, the criterion should somehow minimize the error which occurs as a result of a vector being transmitted instead of the actual values in each image point constituting the macro picture element. A preferred criterion is given by the expression

$$Ia \quad \mid A(\overline{X}) - P(\overline{X} - \overline{RV}) \mid < T$$

for all image points in the macro picture element,

where

A is the image point value in the current picture,

P is the image point value in the previous picture,

$\overline{X}$ is a vector which designates the current image point, and

$\overline{RV}$ is the movement vector.

A second possible criterion is the root mean square error which is given by

$$Ib \quad \Sigma \, [ \, A(\overline{X}) - P(\overline{X} - \overline{RV}) \, ]^2 < T_O$$

The adding up is carried out over all the image points in the picture element. The first criterion is preferred since the second permits large errors in certain points since it is a mean value.

The selection of the threshold T or $T_O$ influences the bit transmission rate. The higher the threshold which is used, the higher the error which is permitted in the selection of a movement vector and the lower, therefore, the bit transmission rate. It is best to allow the threshold to vary depending upon how much movement there is. If there is little movement, the threshold can accordingly be set lower without the bit transmission rate becoming too high.

The second criterion II is used to determine which movement vector is to be transmitted if more than one satisfy the criterion I above.

IIa. The movement vector is selected which gives the smallest sum of prediction errors according to the expression Ib.

IIb. The smallest movement vector is selected, that is to say that which represents the least movement in the picture.

IIc. In the transmitter, there is access to the whole of the current picture and the previous picture. Consequently, use can also be made of macro picture elements E, F, G, H, according to Fig. 3, even though these lie to the right of and below the current macro picture element X and thus are not accessible in the receiver. Accordingly the movement vector which is also suitable in macro picture elements E - H is selected. If more than one movement vectors are suitable in the same number of elements E - H, one of these is selected by means of the criterion IIa or b above. This criterion helps to achieve a uniform field of movement vectors over the picture.

If none of the movement vectors in macro picture elements A - D is suitable in the macro picture element X, a new movement vector is sought according to the invention. In this connection, the movement vectors are tested according to the formula

$$\overline{RV} = \overline{SV} + \overline{V}(k)$$

where $\overline{SV}$ = zero or any of the movement vectors in macro picture elements A - D and $\overline{V}(k)$ = the zero vector for k = zero and then moves with increasing k along the spiral in Fig. 4.

The search is stopped when there are a certain number of steps in the spiral, the movement vector being limited, for example, to a certain length or to eight steps in each direction.

The movement vectors are tested with the criterion Ia or Ib. Either the first which is suitable can be selected or a number N can be saved and the best of them can be selected by means of any of the criteria IIa - IIc. N can be selected in a suitable manner, for example, from 2 up to 10.

If no new movement vector is found, picture element values are transmitted. With reference to the above-mentioned application, it can in this connection be suitable to transmit information relating to the least unsatisfactory of the movement vectors in macro picture elements A - D. This information is best extracted during the first or second step above, that is to say when it is checked whether any of the movement vectors in macro picture elements A - D are suitable in the current macro picture element X.

The present invention does not in principle deal with the movement vectors at the edge of the picture. A possibility, however, is to set the movement vector = the zero vector in a notional margin above and to the left of the actual picture.

To sum up, the present invention proposes a process for finding a movement field to be used in transmission of information relating to moving pictures. The process is particularly suitable when the picture is divided into small so-called macro picture elements. By means of combination with a process for transmission according to the above-mentioned application, the information becomes cheap to transmit since movement vectors in adjoining macro picture elements are used in an advantageous manner. The process results in few actual image point values needing to be transmitted along the wires, which overall means a good picture quality at a relatively low bit transmission rate. The invention is limited only by the claims below.

## Claims

1. A process for forming a field of movement vectors to be used in transmission of information relating to moving pictures, which are represented by image points (bp) with one block of display data (Y) for the luminance and two blocks of display data (U, V) for the chrominance, including the steps of dividing each picture into macro picture elements comprising a number of image points from each respective block of display data (Y, U, V), the respective image points from the respective blocks of display data corresponding to the same physical area on the screen, finding a movement vector for each macro picture element by testing a number of previously formed and transmitted movement vectors for adjoining macro picture elements (A, B, C, D) with regard to the current macro picture element (X) by means of a first criterion (I),

   selecting this movement vector for the current macro pixel if only a single movement vector is found to satisfy the first criterion (I),

   selecting a movement vector for the current macro pixel among those vectors satisfying the first criterion by means of a second criterion if more than one movement vector is found to satisfy the first criterion,

   and seeling a new movement vector for the current macro pixel with another method if none of the movement vectors is found to satisfy the first criterion (I).

2. The process as claimed in claim 1, wherein the following criterion is used as first criterion (I):

$$\mid A(\overline{X}) - P(\overline{X} - \overline{RV}) \mid < T$$

for all image points which belong to the current macro picture element,
where

A is the image point value in the current picture,
P is the image point value in the previous picture
$\overline{X}$ is a vector which designates the current image point,
$\overline{RV}$ is the movement vector in question, and
T is a given threshold value.

3. The process as claimed in claim 1, wherein the following criterion is used as first criterion (I):

$$\sum_{bp \in X} [A(\overline{X}) - P(\overline{X} - \overline{RV})]^2 < T_O$$

where the adding up is calculated over all the image points (bp) which constitute the current macro picture element and where

A is the image point value in the current picture,
P is the image point value in the previous picture,
$\overline{X}$ is a vector which designates the current image point,
bp are the image points of the current macro pixel
$\overline{RV}$ is the movement vector in question, and
$T_O$ is a given threshold value.

4. The process as claimed in claim 1, 2 or 3, wherein the second criterion (II) means that the movement vector which gives the smallest prediction error is selected, which is given by the expression:

$$\sum_{bp \in X} [A(\overline{X}) - P(\overline{X} - \overline{RV})]^2$$

where

A is the image point value in the current picture,
P is the image point value in the previous picture,
$\overline{X}$ is a vector which designates the current image point,
bp are the image points of the current macro pixel
$\overline{RV}$ is the movement vector in question.

5. The process as claimed in claim 1, 2 or 3, wherein the second criterion (II) means that the smallest movement vector is selected.

6. The process as claimed in claim 4 or 5, wherein the second criterion (II) where appropriate means that the movement vector is selected which is also suitable in one or most of the adjoining macro picture elements (E, F, G, H) for which a movement vector has as yet not been formed.

7. The process as claimed in any of the preceding claims, wherein the picture is scanned in rows from left to right and from top to bottom, the previously transmitted movement vectors which are made use of being those which, in relation to the current macro picture element (X), lie directly to the left (A), diagonally above and to the left (B), directly above (C), and diagonally above and to the right (D).

8. The process as claimed in claims 6 and 7, wherein the adjoining macro picture elements with as yet not formed movement vectors are those which, in relation to the current macro picture element (X) lie directly to the right (E), diagonally below and to the right (F), directly below (G), and diagonally below and to the left (H).

9. The process as claimed in any of the preceding claims, wherein new movement vectors ($\overline{RV}$) are tested by means of the first criterion (I), the movement vectors being given by the function

$$\overline{RV} = \overline{SV} + \overline{V}(k), \quad k = 0, 1, 2, 3, \text{etc.}$$

where

$\overline{SV}$ is a starting vector identical with the zero vector or any of the movement vectors in the adjoining macro picture elements (A - D),

$\overline{V}(k)$ is a vector which is identical with the zero vector for k = 0 and receives values along a spiral for k = 1, 2, 3, etc.,

and wherein N movement vectors ($\overline{RV}$) are saved, one of them, if N > 1, being selected by means of the second criterion (II).

10. The process as claimed in claim 9, wherein the starting vector ($\overline{SV}$) is identical with the movement vector in the macro picture element diagonally above and to the right (D) of the current macro picture element (X) and wherein $N \leqq 10$.

**Patentansprüche**

1. Verfahren zur Bildung eines Bewegungsvektor-Feldes zur Verwendung bei der Übertragung von Informationen bezüglich bewegten Bildern, die durch Bildpunkte (bp) mit einem Block von Anzeigedaten (Y) für die Lumineszenz und zwei Blöcken von Anzeigedaten (U, V) für die Chrominanz repräsentiert werden, mit den Schritten der Unterteilung jedes Bildes in Makro-Bildelemente mit einer Anzahl von Bildpunkten aus jedem entsprechenden Block von Anzeigedaten (Y, U, V), wobei die jeweiligen Bildpunkte aus den jeweiligen Blöcken von Anzeigedaten demselben physikalischen Bereich auf dem Schirm entsprechen, Herausfinden eines Bewegungsvektors für jedes Makro-Bildelement durch Überprüfen einer Anzahl von früher gebildeten und übertragenen Bewegungsvektoren für angrenzende Makro-Bildelemente (A, B, C, D) mit Bezug auf das aktuelle Makro-Bildelement (X) mittels eines ersten Kriteriums (I), Auswahl dieses Bewegungsvektors für das aktuelle Makropixel, falls nur für einen einzigen Bewegungsvektor gefunden wurde, daß er das erste Kriterium (I) erfüllt,
Auswahl eines Bewegungsvektors für das aktuelle Makropixel unter solchen Vektoren, die das erste Kriterium erfüllen, mittels eines zweiten Kriteriums, falls für mehr als einen Bewegungsvektor gefunden wurde, daß sie erste Kriterium erfüllen,
und Suchen eines neuen Bewegungsvektors für das aktuelle Makropixel mit einem anderen Verfahren, falls für keinen der Bewegungsvektoren gefunden wird, daß sie das erste Kriterium (I) erfüllen.

2. Verfahren nach Anspruch 1,
wobei das folgende Kriterium als erstes Kriterium (I) verwendet wird:

$$\left| A(\overline{X}) - P(\overline{X} - \overline{RV}) \right| < T$$

für alle Punkte, die dem aktuellen Makro-Bildelement entsprechen,
wobei A ein Bildpunktwert im aktuellen Bild ist,
P ein Bildpunktwert im vorhergehenden Bild ist,
$\overline{X}$ ein Vektor ist, der den aktuellen Bildpunkt bezeichnet,
$\overline{RV}$ der fragliche Bewegungsvektor ist und
T ein vorgegebener Schwellwert ist.

3. Verfahren nach Anspruch 1,
wobei das folgende Kriterium als erstes Kriterium (I) verwendet wird

$$\sum_{bp \in X} [A(\overline{X}) - P(\overline{X} - \overline{RV})]^2 < T_o$$

wobei die Summierung über alle die Bildpunkte (bp) berechnet wird, die das aktuelle Makro-Bildelement bilden und wobei A ein Bildpunktwert im aktuellen Bild ist,
P ein Bildpunktwert im vorhergehenden Bild ist,
$\overline{X}$ ein Vektor ist, der den aktuellen Bildpunkt bezeichnet,
bp die Bildpunkte des aktuellen Makropixels sind,
$\overline{RV}$ der infragestehende Bewegungsvektor ist, und
$T_o$ ein vorgegebener Schwellwert ist.

4. Verfahren nach einem der Ansprüche 1, 2 oder 3, wobei das zweite Kriterium (II) bedeutet, daß der Bewegungsvektor, der den kleinsten Vorhersagefehler angibt, ausgewählt wird, was durch den Ausdruck:

$$\sum_{bp \in X} [A(\overline{X}) - P(\overline{X} - \overline{RV})]^2$$

gegeben ist, wobei
A der Bildpunktwert im aktuellen Bild ist,
P der Bildpunktwert im vorhergehenden Bild ist,
$\overline{X}$ ein Vektor ist, der den aktuellen Bildpunkt angibt,
bp die Bildpunkte des aktuellen Makropixels sind,
$\overline{RV}$ der infragestehende Bewegungsvektor ist.

5. Verfahren nach einem der Ansprüche 1, 2 oder 3,
wobei das zweite Kriterium (II) bedeutet, daß der kleinste Bewegungsvektor ausgewählt wird.

6. Verfahren nach Anspruch 4 oder 5,
wobei das zweite Kriterium (II), wo angemessen, bedeutet, daß der Bewegungsvektor ausgewählt wird, der auch für eines oder mehrere angrenzende Makro-Bildelemente (E, F, G, H) geeignet ist, für die ein Bewegungsvektor noch nicht gebildet wurde.

7. Verfahren nach einem der vorstehenden Ansprüche,
wobei das Bild in Zeilen von links nach rechts und von oben nach unten abgetastet wird, wobei die vorher übertragenen Bewegungsvektoren, die verwendet werden, diese sind, die im Bezug auf das aktuelle Makrobildelement (X) direkt links (A), diagonal oberhalb und links (B) direkt oberhalb (C) und diagonal oberhalb und rechts (D) liegen.

8. Verfahren nach Anspruch 6 und 7,
wobei die angrenzenden Makrobildelemente, für die noch keine Bewegungsvektoren gebildet sind, diese sind, die in Bezug auf das aktuelle Makrobildelement (X) direkt rechts (E), diagonal unterhalb und rechts (F), direkt unterhalb (G) und diagonal unterhalb und links (H) liegen.

9. Verfahren nach einem der vorstehenden Ansprüche, wobei neue Bewegungsvektoren ($\overline{RV}$) mittels des ersten Kriteriums (I) geprüft werden, wobei die Bewegungsvektoren durch die Funktion
$$\overline{RV} = \overline{SV} + \overline{V}(k), \; k = 0, 1, 2, 3 \text{ etc.}$$
gegeben sind, wobei
$\overline{SV}$ ein Startvektor ist, der identisch einem Nullvektor oder einem der Bewegungsvektoren in den angrenzenden Makrobildelementen (A-D) ist,
$\overline{V}(k)$ ein Vektor ist, der für k = 0 identisch mit dem Nullvektor ist und entlang einer Spirale Werte für k = 1, 2, 3, etc. einnimmt,
und wobei N Bewegungsvektoren ($\overline{RV}$) gespeichert werden, von denen, falls N > 1, einer mittels des zweiten Kriteriums (II) ausgewählt wird.

10. Verfahren nach Anspruch 9,
wobei der Startvektor ($\overline{SV}$) identisch dem Bewegungsvektor im Makrobildelement diagonal oberhalb und rechts (D) des aktuellen Makrobildelementes (X) ist und wobei N ≦ 10 ist.

**Revendications**

1. Procédé de formation d'un champ de vecteurs de mouvement à utiliser dans la transmission d'information relative à des images animées, qui sont représentées par des points d'image (bp) avec un bloc de données d'affichage (Y) pour la luminance et deux blocs de données d'affichage (U, V) pour la chrominance, comprenant les étapes consistant à
diviser chaque image en éléments d'image macro comprenant plusieurs points d'image provenant de chaque bloc respectif de données d'affichage (Y, U, V), les points d'image respectifs provenant des blocs respectifs de données d'affichage correspondant à la même région physique sur l'écran,

trouver un vecteur de mouvement pour chaque élément d'image macro en testant plusieurs vecteurs de mouvement précédemment formés et transmis pour des éléments d'image macro adjacents (A, B, C, D) par rapport à l'élément d'image macro courant (X) au moyen d'un premier critère (I),

choisir ce vecteur de mouvement pour l'élément d'image macro courant si on ne trouve qu'un seul vecteur de mouvement qui satisfasse le premier critère (I),

choisir un vecteur de mouvement pour l'élément d'image macro courant parmi les vecteurs satisfaisant le premier critère au moyen d'un deuxième critère si on trouve plus d'un vecteur de mouvement qui satisfasse le premier critère,

et chercher un nouveau vecteur de mouvement pour l'élément d'image macro courant avec une autre méthode si on ne trouve aucun vecteur de mouvement qui satisfasse le premier critère.

2. Procédé selon la revendication 1, dans lequel le critère suivant est utilisé comme premier critère (I) :

$$la \ |A(\overline{X}) - P(\overline{X} - \overline{RV})| < T$$

pour tous les points d'image qui appartiennent à l'élément d'image macro courant, où

A est la valeur du point d'image dans l'image courante,

P est la valeur du point d'image dans l'image précédente,

$\overline{X}$ est un vecteur qui désigne le point d'image courant, et

$\overline{RV}$ est le vecteur de mouvement en question, et

T est une valeur de seuil donnée.

3. Procédé selon la revendication 1, dans lequel le critère suivant est utilisé comme premier critère (I) :

$$\sum_{bp \in X} [A(\overline{X}) - P(\overline{X} - \overline{RV})]^2 < T_o$$

où la sommation est calculée sur tous les points d'image (bp) qui constituent l'élément d'image macro courant et où

A est la valeur du point d'image dans l'image courante,

P est la valeur du point d'image dans l'image précédente,

$\overline{X}$ est un vecteur qui désigne le point d'image courant,

bp sont les points d'image de l'élément d'image macro courant,

$\overline{RV}$ est le vecteur de mouvement en question, et

$T_o$ est une valeur de seuil donnée.

4. Procédé selon la revendication 1, 2 ou 3, dans lequel le deuxième critère (II) signifie qu'on choisit le vecteur de mouvement qui donne la plus petite erreur de prédiction, qui est donnée par l'expression :

$$\sum_{bp \in X} [A(\overline{X}) - P(\overline{X} - \overline{RV})]^2$$

où

A est la valeur du point d'image dans l'image courante,

P est la valeur du point d'image dans l'image précédente,

$\overline{X}$ est un vecteur qui désigne le point d'image courant,

bp sont les points d'image de l'élément d'image macro courant, et

$\overline{RV}$ est le vecteur de mouvement en question.

5. Procédé selon la revendication 1, 2 ou 3, dans lequel le deuxième critère (II) signifie qu'on choisit le plus petit vecteur de mouvement.

6. Procédé selon la revendication 4 ou 5, dans lequel le deuxième critère (II), là où il est approprié, signifie qu'on choisit le vecteur de mouvement qui convient aussi dans un ou la plupart des éléments d'image macro adjacents (E, F, G, H) pour lesquels le vecteur de mouvement n'a pas encore été formé.

7. Procédé selon l'une quelconque des revendications précédentes, dans lequel l'image est balayée par lignes de gauche à droite et de haut en bas, les vecteurs de mouvement précédemment transmis qu'on utilise étant ceux qui, par rapport à l'élément d'image macro courant (X), se trouvent directement à gauche (A), au-dessus en diagonale et à gauche (B), directement au-dessus (C), et au-dessus en diagonale et à droite (D).

8. Procédé selon les revendications 6 et 7, dans lequel les éléments d'image macro adjacents dont les vecteurs de mouvement n'ont pas encore été formés sont ceux qui, par rapport à l'élément d'image macro courant (X), se trouvent directement à droite (E), en dessous en diagonale et à droite (P), directement en dessous (G), et en dessous en diagonale et à gauche (H).

9. Procédé selon l'une quelconque des revendications précédentes, dans lequel les nouveaux vecteur de mouvement ($\overline{RV}$) sont testés au moyen du premier critère (I), les vecteurs de mouvement étant donnés par la fonction

$$\overline{RV} = \overline{SV} + \overline{V}(k), \; k = 0, 1, 2, 3, \text{etc.}$$

où

$\overline{SV}$ est un vecteur de départ égal au vecteur nul ou à l'un quelconque des vecteurs de mouvement dans les éléments d'image macro adjacents (A à D),

$\overline{V}(k)$ est un vecteur qui est égal au vecteur nul pour k = 0 et reçoit des valeurs le long d'une spirale pour k = 1, 2, 3, etc.

et dans lequel N vecteurs de mouvement ($\overline{RV}$) sont retenus, l'un deux, si N > 1, étant choisi au moyen du deuxième critère (II).

10. Procédé selon la revendication 9, dans lequel le vecteur de départ ($\overline{SV}$) est égal au vecteur de mouvement dans l'élément d'image macro au-dessus en diagonale et à droite (D) de l'élément d'image macro courant (X) et dans lequel N ≦ 10.

FIG. 1

FIG. 2

FIG. 3

FIG. 4